(19) Europäisches Patentamt
European Patent Office
Office européen des brevets

(11) EP 0 949 736 B1

(12) **EUROPEAN PATENT SPECIFICATION**

(45) Date of publication and mention
of the grant of the patent:
**17.03.2004 Bulletin 2004/12**

(51) Int Cl.⁷: **H02H 7/122**

(21) Application number: **98830221.2**

(22) Date of filing: **10.04.1998**

(54) **Electronic bridge and half-bridge circuits with suppression of high-voltage transients on the power supply line**

Elektronische Brücken- und Halbbrückenschaltungen mit Unterdrückung von Spitzenspannungen auf der Versorgungsleitung

Circuits en pont et demi-pont avec suppression de tension de crête sur la ligne de distribution

(84) Designated Contracting States:
**DE FR GB IT**

(43) Date of publication of application:
**13.10.1999 Bulletin 1999/41**

(73) Proprietor: **STMicroelectronics S.r.l.**
**20041 Agrate Brianza (Milano) (IT)**

(72) Inventors:
• **Crespi, Angelo**
**20092 Cinisello Balsamo, Milan (IT)**

• **Poletto, Vanni**
**15033 Casale Monferrato, Alessandria (IT)**

(74) Representative: **Modiano, Guido, Dr.-Ing. et al**
**Modiano & Associati SpA**
**Via Meravigli, 16**
**20123 Milano (IT)**

(56) References cited:
**EP-A- 0 294 887**          **EP-A- 0 340 918**
**EP-A- 0 680 147**          **WO-A-94/23497**

**Description**

The present invention relates to electronic bridge and half-bridge circuits with suppression of high-voltage transients on the power supply line.

It is known that transients at a voltage which is higher than the normal voltage and higher than the voltage that the circuits can withstand without damage can occur on the power supply line of electronic circuits. This occurs, for example, in the automotive field.

Electronic circuits, particularly so-called "half-bridge" and "bridge" circuits, must be protected against these dangerous voltages.

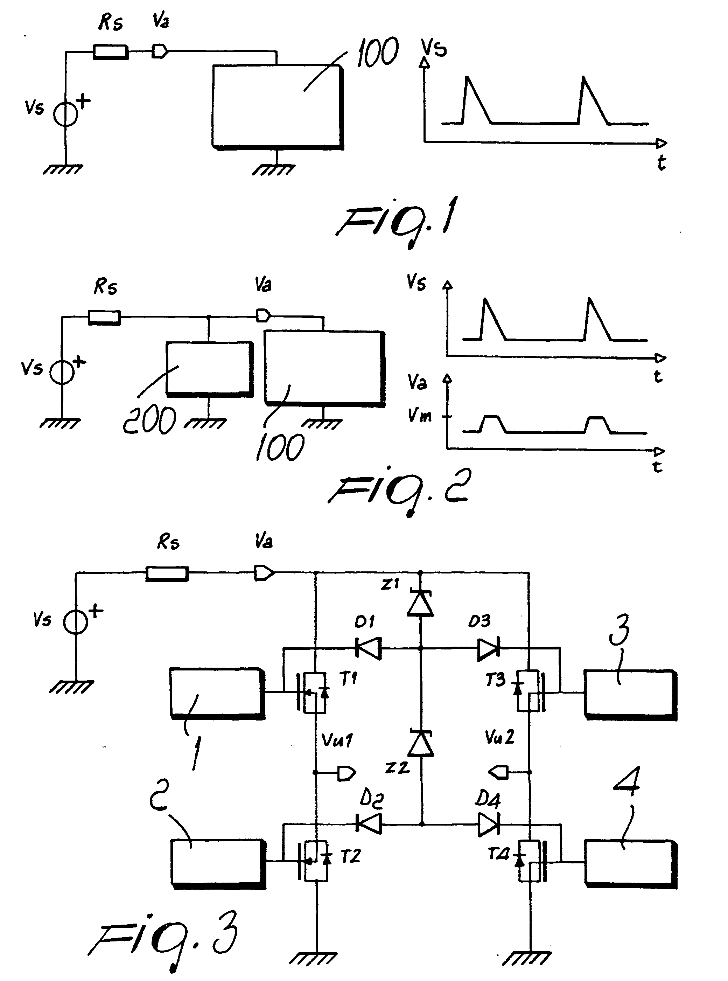

Figure 1 illustrates a bridge or half-bridge electronic circuit, designated by the reference numeral 100 and connected to a power supply voltage source Vs. Rs designates the internal resistance of the power supply voltage source of Vs, while Va designates the power supply terminal of the electronic circuit 100.

The time chart associated with Figure 1 plots the power supply voltage Vs with a transient whose voltage is higher than the normal voltage.

The method normally used to protect electronic circuits against high-voltage transients on the power supply line consists in adding an adapted transient suppression device.

Figure 2 illustrates the prior art of adding a transient suppression device, designated by the reference numeral 200.

The transient suppression circuit 200 is thus placed between the power supply terminal Va of the circuit and the ground.

The time chart shows that when the voltage Va reaches the value Vm, which can be withstood by the electronic circuit 100, the transient suppression device 200 intervenes and limits the voltage Va to said value.

The suppression device 200 must therefore be able to absorb the energy of the voltage transient and must therefore contain additional high-voltage power components which are bulky and expensive.

WO/94 23497 discloses a circuit for protecting power semiconductor switches that may be switched on and off against switching overvoltages.

EP-0 680 147 discloses a semiconductor power module and power conversion device having the aim of protecting from an overvoltage.

The aim of the present invention is therefore to provide electronic bridge and half-bridge circuits with suppression of high-voltage transients on the power supply line which do not resort to additional power components.

Within the scope of this aim, an object of the present invention is to provide electronic bridge and half-bridge circuits with suppression of high-voltage transients on the power supply line which are able to self-protect against said voltage transients.

Another object of the present invention is to provide electronic bridge and half-bridge circuits with suppression of high-voltage transients on power supply lines in which differential output voltage limiting is provided during power supply voltage transients.

Another object of the present invention is to provide bridge and half-bridge circuits with suppression of power supply voltage transients which are capable of discriminating between transients to be suppressed and high-energy transients.

Another object of the present invention is to provide bridge and half-bridge circuits with suppression of high-voltage transients on the power supply line which are highly reliable, relatively easy to manufacture and at competitive costs.

This aim, these objects and others which will become apparent hereinafter are achieved by an electronic circuit with suppression of high-voltage transients on the power supply line, comprising at least one pair of power transistors which are series-connected between a power source and the ground, each power transistor being provided with a respective driving circuit, characterized in that it comprises, for each one of the transistors of said pair, a diode and a Zener diode, the diode of the transistor connected to the supply voltage being connected, by means of its cathode terminal, to the base terminal of said transistor and, by means of its anode terminal, to the anode terminal of the Zener diode, the cathode terminal whereof is connected to the power source, the cathode terminal of the Zener diode of the transistor that is connected to the ground being connected to the anode terminal of the Zener diode related to the transistor that is connected to the power supply.

Further characteristics and advantages of the invention will become apparent from the description of preferred but not exclusive embodiments of the circuit according to the invention, illustrated only by way of non-limitative example in the accompanying drawings, wherein:

Figure 1 is a block diagram of an electronic bridge and half-bridge circuit connected to the power supply line, showing power supply voltage transients;
Figure 2 is a block diagram of an electronic bridge or half-bridge circuit connected to the power supply line, with a high-voltage transient suppression device, showing the supply voltage and its clipping;

Figure 3 is a circuit diagram, partially in block form, of an electronic bridge circuit executed according to the present invention;

Figure 4 is a circuit diagram, partially in block form, of an electronic half-bridge circuit executed according to the present invention;

Figure 5 is a view of a second embodiment of the circuit shown in Figure 4;

Figure 6 is a circuit diagram, partially in block form, of a third embodiment of the circuit according to the present invention;

Figure 7 is a chart which plots the power supply voltage over time;

Figure 8 is a circuit diagram, partially in block form, of a fourth embodiment of the circuit according to the invention, shown for a configuration of the bridge type;

Figure 9 is a circuit diagram, partially in block form, of the fourth embodiment of the circuit according to the invention, shown for a circuit of the half-bridge type;

Figure 10 is a block diagram of a circuit for discriminating among power supply voltage transient types;

Figure 11 is a chart which plots waveforms of signals detected in the circuit of Figure 10, in a first case of power supply voltage transient;

Figure 12 is a chart which plots waveforms of signals detected in the circuit of Figure 10, in a second case of power supply voltage transient;

Figure 13 is a further chart which plots two different types of power supply voltage transient;

Figure 14 is a block diagram of a second embodiment of the circuit for discriminating among power supply voltage transient types;

Figure 15 is a chart which plots waveforms of signals detected in the circuit of Figure 14, in a first type of transient; and

Figure 16 is a chart which plots waveforms of signals detected in the circuit of Figure 14, in a second type of transient.

In all the figures, identical elements are designated by the same reference numerals.

Figures 1 and 2 are not described further, since they have already been discussed above.

With reference therefore to Figure 3, said figure is a circuit diagram, partially in block form, of a first embodiment of a circuit of the bridge type, executed according to the present invention.

The bridge circuit is formed by a first pair of transistors T1, T2, which are series-connected between a power source Vs and the ground, and by a second pair of transistors T3, T4, which are also series-connected and are parallel-connected to the first pair of transistors. The transistors T1, T2, T3 and T4 can be N-channel DMOS transistors, as shown in Figure 3, or can be transistors of another kind.

The transistors T1-T4 are driven by driving circuits, designated by the reference numerals 1, 2, 3 and 4 respectively, which bias adapted diodes D1-D4 and Zener diodes Z1 and Z2, which allow to suppress high-voltage transients on the power supply line.

In particular, the diodes D1 and D3 have common-connected anode terminals and are connected, by means of their cathode terminals, to the bases of the transistors T1 and T3 respectively.

Likewise, the diodes D2 and D4 have common-connected anode terminals and are connected, by means of their cathode terminals, to the base terminals of the transistors T2 and T4 respectively.

The Zener diodes Z1 and Z2 are respectively connected, by means of their anode terminal, to a common point between the diodes D1 and D3 and the diodes D2 and D4.

The cathode terminals of the diodes Z1 and Z2 are respectively connected to the power supply line and to the common point between the diodes D1 and D3.

If the power supply voltage Va reaches a value Vm, which is withstood by the electronic circuit and is given by:

$$V_m = V_{Z1} + V_{Z2} + V_{beD2} + V_{gsT2} = V_{Z1} + V_{Z2} + V_{beD4} + V_{gsT4}$$

the power transistors T1-T4 are switched on by means of the diodes D1-D4 and the Zener diodes Z1 and Z2. In this way, the supply voltage Va can never exceed the value of Vm.

The diodes D1-D4 and the Zener diodes Z1 and Z2 are not power components. A high level of current in fact does not flow across them because their task is to switch on the power transistors T1-T4 in which the high-level current flows.

During high-voltage transient suppression, the total current Is that arrives from the power source and flows across the transistors T1-T4 is given by:

$$I_s = (V_s - V_m)/R_s$$

If the four power transistors T1-T4 have the same dimensions, and if the voltages of the Zener diodes Z1 and Z2 are chosen so that a voltage equal to half the voltage Vm, which can be withstood by the electronic circuit, occurs across each power transistor T1-T4, i.e., if:

$$V_{22} = V_{z1} + V_{beD1} + V_{gsT1} = V_{Z1} + V_{beD3} + V_{gsT3}$$

where VbeD1 and VbeD3 are the direct biasing voltages of the diodes D1 and D3 respectively, VgsT1 and VgsT3 are the gate-source voltages of the transistors T1 and T3 respectively, while Vz1 and Vz2 are the trigger voltages of the Zener diodes Z1 and D2 respectively, then the high-voltage transients on the power supply line are suppressed by distributing their energy in equal amounts among the power transistors T1-T4.

The power dissipated by each power transistor is in fact given by:

$$P = (V_m/2) \times (I_s/2) = (V_m \times I_s)/4$$

During normal operation without transients on the power supply line, the diodes D1-D4 allow the four power transistors T1-T4 to be switched on and off independently.

Figure 4 illustrates the circuit according to the invention, applied to a half-bridge circuit.

In the figure, T1 and T2 are the two power transistors that form the half-bridge circuit. As mentioned earlier for the bridge circuit, they can be N-channel DMOS transistors, as shown in Figure 4, or can be transistors of another kind.

The power transistors T1 and T2 are driven by the driving circuits 1 and 2. Said driving circuits also bias the diodes D1 and D2 and the Zener diodes Z1 and Z2 which allow to suppress high-voltage transients on the power supply line.

If the supply voltage Va reaches a value Vm that the electronic circuit can withstand, given by:

$$V_m = V_{Z1} + V_{Z2} + V_{beD2} + V_{gsT2}$$

the power transistors T1 and T2 are switched on by means of the diodes D1 and D2 and the Zener diodes Z1 and Z2. The supply voltage Va cannot exceed the value of Vm.

During suppression of high-voltage transients, the total current Is that arrives from the power source and flows across the power transistors T1 and T2 is given by:

$$I_s = (V_s - V_m)/R_s$$

If the two power transistors T1 and T2 have the same dimensions, and if the voltages of the Zener diodes Z1 and Z2 are chosen so that a voltage equal to half the voltage Vm that the electronic circuit can withstand occurs across the two power transistors, i.e., if:

$$V_{Z2} = V_{Z1} + V_{beD1} + V_{gsT1}$$

where $V_{beD1}$ is the voltage between the base and the emitter of the diode D1 and $V_{gsT1}$ is the voltage between the gate and the source of the transistor T1,
then the high-voltage transients on the power supply line are suppressed by distributing their energy in equal parts between the power transistors T1 and T2.

The power dissipated by each power transistor is in fact given by:

$$P = (V_m/2) \times I_s = (V_m \times I_s)/2$$

During normal operation, without transients on the power supply line, the diode D1 allows the transistor T1 to switch on and the diode D2 allows T1 to be switched off even when the transistor T2 is on.

Figure 5 illustrates the diagram for the half-bridge circuit, which is similar to the circuit shown in Figure 4, but in which the transistor T1, which is connected to the power supply line, is of the P-channel DMOS type instead of being of the N-channel type.

The transistor T2 is an N-channel DMOS transistor in this circuit also.

In this case, if the supply voltage Va reaches a voltage Vm given by:

$$V_m = V_{gsT1} + V_{Z1} + V_{beD1} + V_{Z2} + V_{beD2} + V_{gsT2}$$

then the power transistors T1 and T2 are switched on by means of the diodes D1 and D2 and the Zener diodes Z1 and Z2. The supply voltage Va cannot exceed the value of Vm.

During normal operation without transients on the power supply line, the diodes D1 and D2 respectively allow the transistors T1 and T2 to switch on.

A diagram similar to the one shown in Figure 5 can be used for the bridge circuit shown in Figure 3 as well, providing the two power transistors T1 and T3, connected to the power supply, so that they are of the P-channel DMOS type.

If an inductive load is connected between the outputs Vu1 and Vu2 of the bridge circuit of Figure 3, then during high-voltage transients on the power supply line the differential output voltage |Vu1 - Vu2| can assume, due to the recirculation diodes of the power transistors T1-T4, a value which is approximately equal to the voltage to which the transients Vm are limited. This voltage value may be too high for some particular loads.

In this regard, Figure 6 illustrates a circuit diagram, derived from the diagram of Figure 3, with diodes D5, D6 and D7 which are added to limit the differential output voltage |Vu1 - Vu2| to a lower value.

The diode D5 is connected, by means of its anode terminal, to the source terminal of the transistor T1 and, by means of its cathode terminal, to the cathode terminal of the diode Z2 and of the diode D6 arranged opposite thereto; the anode terminal of said diode D6 is connected to the source terminal of the transistor T3.

The diode D7 is connected, by means of its cathode terminal, to the common point between the cathode terminals of the diodes D5, D6 and Z2 and its anode terminal is connected to the common point of the anode terminals of the diodes D1, D3 and Z1.

The outputs Vu1 and Vu2 are limited respectively to the maximum values Vum1 and Vum2 given by:

$$V_{um1} = V_{beD5} + v_{Z2} + V_{beD2} + V_{gsT2}$$

$$V_{um2} = V_{beD6} + V_{Z2} + V_{beD4} + V_{gsT4}$$

$$V_{um1} = V_{um2}$$

Vu1 and Vu2 can vary over the following intervals:

$$V_{u1} : -V_{be} \div V_{um1}$$

$$V_{u2} : -V_{be} \div V_{um2}$$

where $V_{be}$ is the voltage of the recirculation diodes of the transistors T2 and T4.

The differential output voltage |Vu1 - Vu2| can reach at the most the following value:

$$|V_{u1} - V_{u2}|_{max} = V_{be} + V_{um1} = V_{be} + V_{um2}$$

The transients that occur with a low resistance of the power source Rs have, other parameters being equal, a greater ability to transfer electric power to the electronic circuit and are accordingly more dangerous.

The total current Is that must flow across the power transistors T1-T4 during transient suppression is in fact given by:

$$I_s = (V_s - V_m)/R_s$$

Is is therefore inversely proportional to Rs.

If the source voltage Vs and the voltage Vm at which transient suppression occurs are equal, transients with a lower source resistance Rs are more dangerous, since they cause higher currents to flow across the power transistors T1-T4, dissipating more power.

In some applications, for example for motor vehicles, there can be two kinds of transient on the power supply line, with the values indicated hereafter for the following parameters:

- -- maximum voltage Vsm
- -- value of the internal resistance Rs of the power source
- -- rise time Ts
- -- duration Td

Figure 7 plots the parameters Vsm, Ts and Td.

The two types of transient can be as follows:

Transient 1

- -- Vsm1 cannot be withstood by the electronic circuit
- -- short rise time Ts1
- -- short duration Td1
- -- high internal resistance Rs1 of the power source.

Assume that the bridge or half-bridge electronic circuit can withstand the current and the electric power required to suppress the transient 1.

Transient 2

- -- Vsm2 can be withstood by the electronic circuit
- -- long rise time Ts2
- -- long duration Td2
- -- low internal source resistance Rs2

Assume that the bridge or half-bridge circuit is unable to withstand the current and the electric power required to suppress the transient 2.

$$\text{Let } V_{sm2} < V_{cm} < V_{sm1}$$

where Vcm is the maximum power supply voltage that can be applied to the electronic circuit without damaging it.

Transient 1 must be suppressed, since Vsm1 > Vcm.

Transient 2 has not to be suppressed, since Vsm2 < Vcm; furthermore, transient 2 must not be suppressed by the electronic circuit, since the energy that the transient would transfer to said circuit would be very high because Rs2 is low and Td2 is high.

Different cases can be distinguished on the basis of the relative values of the parameters of transients 1 and 2.

Case 1

If the difference (Vcm - Vsm2) is sufficiently great and ensures error margins which are sufficient to place Vm between Vcm and Vsm2, it is possible to use the circuit diagrams of Figures 3 and 4, choosing Vm between Vcm and Vsm2.

In this manner, the electronic circuit suppresses transients of type 1 but does not suppress transients of type 2.

Case 2

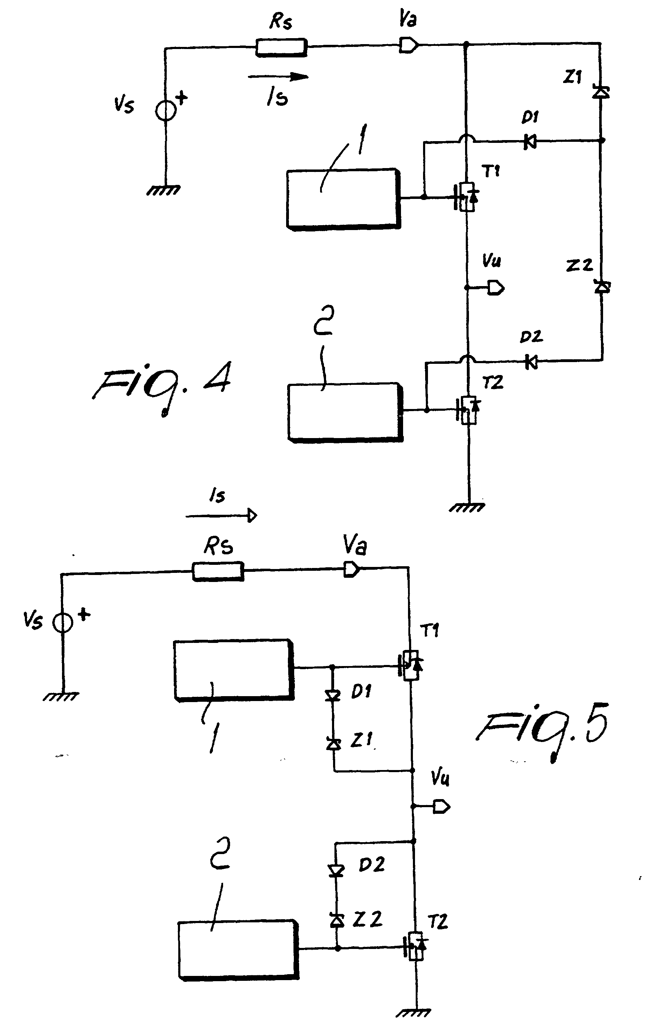

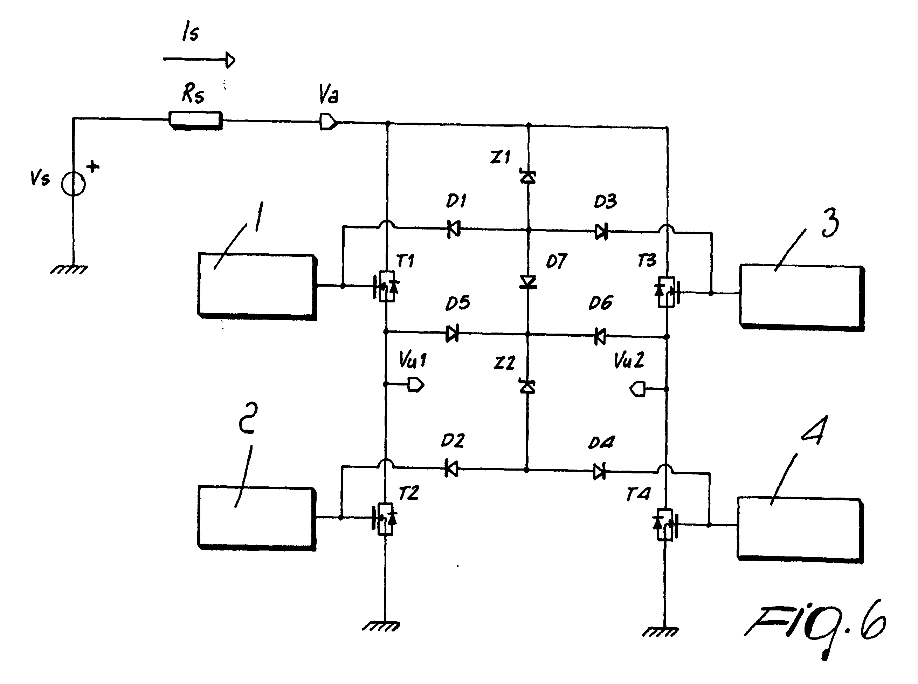

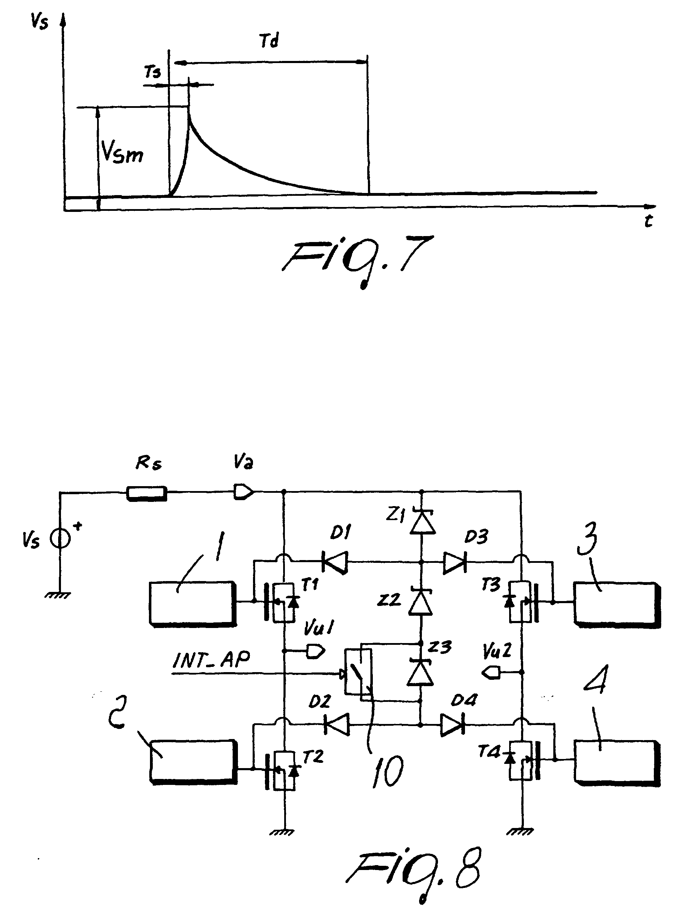

If the difference (Vcm - Vsm2) is small and does not ensure error margins sufficient to place Vm between Vcm and Vsm2, it is possible to use the diagrams of Figures 8 and 9 for the bridge circuit and for the half-bridge circuit, respectively.

In Figures 8 and 9 an additional Zener diode Z3 is added and a switch 10 is parallel-connected thereto. The Zener diode Z3 is series-connected to the Zener diode Z2.

The diode Z3 and the switch 10 allow to have two possible values for the supply voltage Va, which causes transient suppression to intervene:

Vm1: occurs when the switch 10 is closed
Vm2: occurs when the switch 10 is open.

When the switch 10 is open, the voltage at which transient suppression intervenes is increased by the value of the voltage of the Zener diode Z3, i.e., Vz3:

$$V_{m2} = V_{m1} + V_{z3}$$

The state of the switch 10 depends on the logic value of a signal INT-AP. If the signal INT-AP is equal to 1, the switch 10 is open; otherwise, if the signal is equal to 0, the switch 10 is closed.

Case 2 can be distinguished further into cases 2a and 2b.

Case 2a

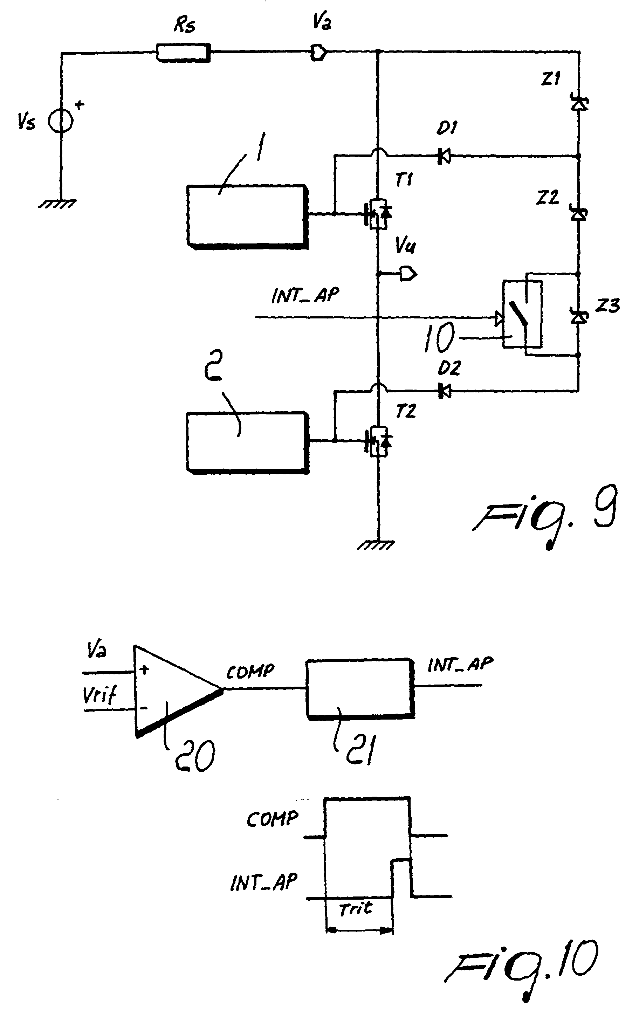

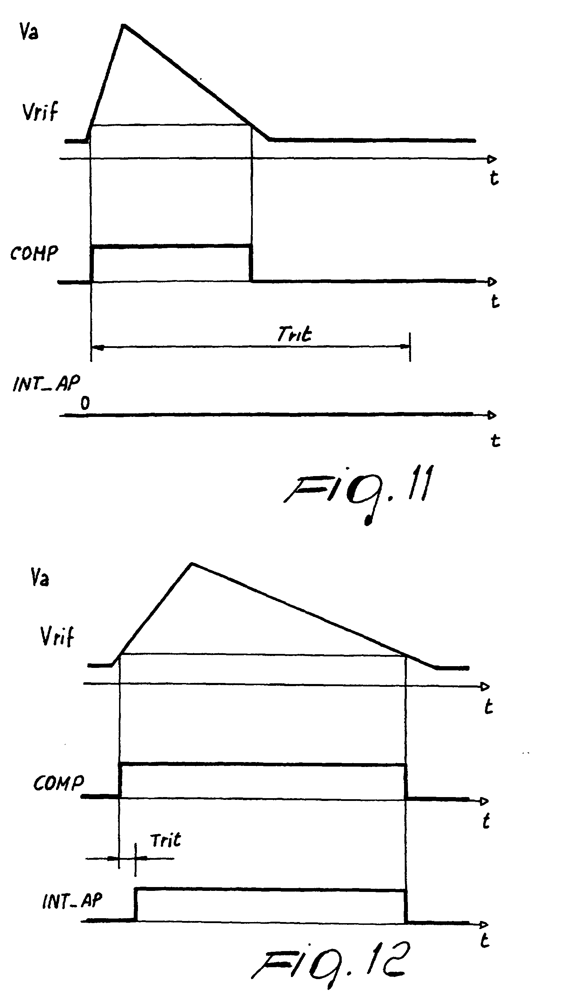

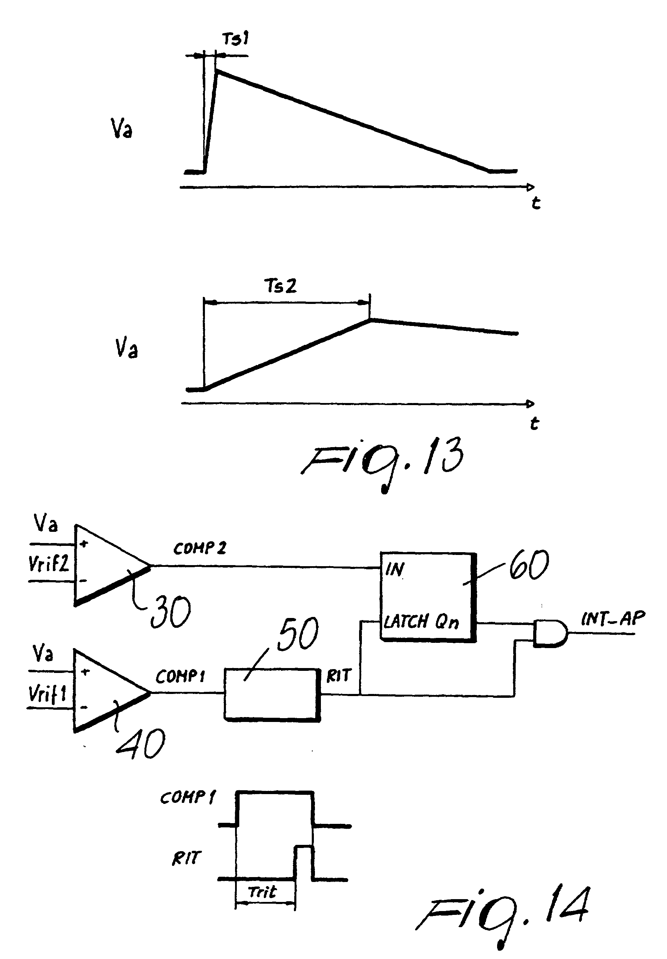

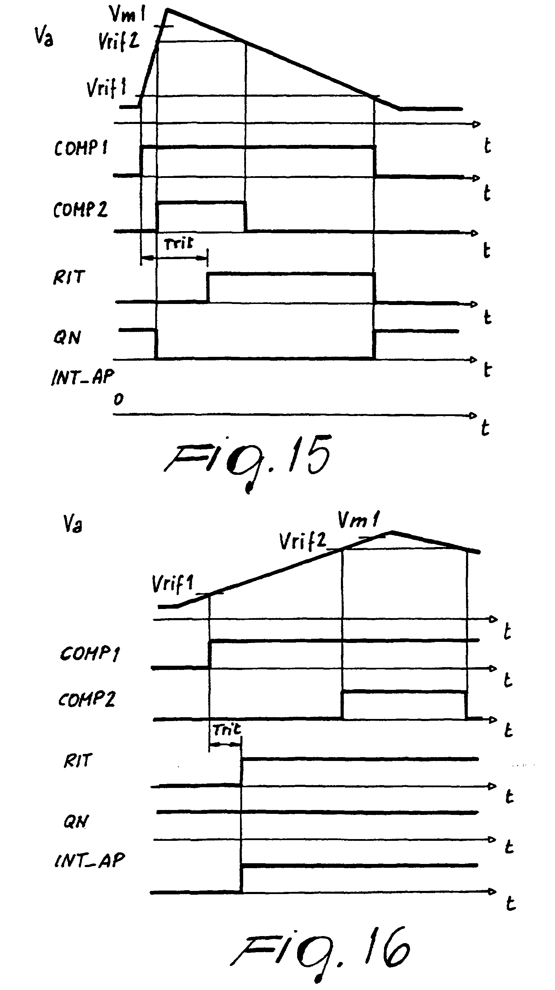

If the duration Td1 of the transient 1 is sufficiently lower than the rise time Ts2 of transient 2, then discrimination between the two transient types can be performed by creating the signal INT-AP with the circuit shown in Figure 10.

In said figure, a comparator 20 receives in input the supply voltage Va and an overvoltage reference voltage Vrif in order to emit in output a comparison signal COMP which is fed into a delay block 21, which supplies in output the signal INT-AP. Said signal is obtained by delaying the rising fronts of the signal COMP for a time interval Trit, as shown by the chart included in Figure 10.

The falling fronts of the signal COMP are not delayed. If the signal COMP has a rising front followed by a falling front after a time interval of less than Trit, then the output signal INT-AP remains at the value 0, without switching.

The waveforms for transient 1 and for transient 2 are shown in Figures 11 and 12 respectively.

If transient 1, which is fast and at high voltage and must be suppressed, occurs as shown in Figure 11, the signal INT-AP remains at the value 0 and the switch 10 of Figures 8 (for the bridge circuit) and 9 (for the half-bridge circuit) remains closed. Transient suppression is activated, limiting the supply voltage Va to the value of Vm1.

If instead transient 1, which is slow and at low voltage and high energy and must not be suppressed, occurs as shown in Figure 12, the signal INT-AP switches to the value 1 after a time interval Trit has elapsed from the moment when the supply voltage Va exceeded the overvoltage reference value Vrif. The signal INT-AP remains at the value 1 throughout the transient, until the power supply voltage Va is once again lower than the reference voltage Vrif.

During the transient, the switch 10 of Figures 8 and 9 remains open and the Zener diode Z3 raises the transient suppression voltage from the value Vm1 to the value Vm2.

If one chooses the transient suppression voltage Vm2 so that

$$V_{m2} > V_{sm2},$$

the bridge or half-bridge circuit does not suppress the low-voltage, high energy transient.

Case 2b

If the duration Td1 of the transient 1 is not shorter than the rise time Ts2 of transient 2 enough to allow to apply the concepts of case 2a, but there is a sufficient difference between the rise times Ts1 and Ts2, as shown in Figure 13, then the logic signal INT-AP can be generated by using the circuit of Figure 14.

This circuit uses two comparators 30 and 40, which receive in input respectively the supply voltage Va and the references Vrif1 and Vrif2, with:

$$V_{rif1} < V_{rif2} < V_{m1}$$

where Vm1 is the value of the voltage Va to which fast, high-voltage transients are limited.

The signal in output from the comparator 40, designated by COMP 1, is input to a delay block 50, which provides in output a logic signal RIT which is obtained by delaying the rising fronts of the signal COMP 1 for a time interval Trit.

The falling fronts of the signal COMP 1 are not delayed: if COMP 1 has a rising front followed by a falling front after a time interval of less than Trit, then the output RIT remains at the logic value 0, without switching.

The signal in output from the comparator 30, designated by COMP 2, is fed, together with the signal RIT, to a latch element 60, where the signal COMP 2 is the input IN of the latch 60, while the signal RIT in output from the delay block 50 is the latch input of the latch 60.

When the latch input is equal to 0, one has:

Qn, which is the inverted output of the latch circuit 60, = inverted IN = inverted COMP 2.

When the latch input is equal to 1, one instead has:

Qn locked in the state assumed at the rising front of the latch signal.

The signal INT-AP is given by:

INT-AP = RIT, ANDed with the signal Qn.

The output Qn of the circuit 60 locks after a time interval Trit has elapsed from the time when COMP 1 switched from 0 to 1, if COMP 1 has remained at 1.

Figure 15 illustrates the waveforms produced by the transient 1 in the circuit of Figure 14.

When the voltage Va exceeds Vrif1, the signal COMP 1 switches from 0 to 1 and the delay time Trit starts to elapse.

When instead the voltage Va exceeds Vrif2, the signal COMP 2 switches from 0 to 1 and Qn switches from 1 to 0, since the latch circuit 60 is transparent; the delay Trit has not elapsed yet, since the rising front of the transient 1 is fast by assumption.

When Trit ends, the signal RIT switches from 0 to 1 and the value of COMP 2 is evaluated. The output Qn is locked to the inverted value of COMP 2.

When the voltage Va becomes lower than Vrif1, the signal COMP 1 switches from 1 to 0 and the signal RIT switches from 1 to 0 and Qn switches from 0 to 1.

The switch 10 of Figures 8 and 9 remains closed and the voltage Va is limited to the value Vm1 during the transient.

Figure 16 illustrates the waveforms produced by the transient 2 in the circuit of Figure 14.

When the voltage Va exceeds Vrif1, the signal COMP 1 switches from 0 to 1 and the delay time Trit starts to elapse.

When Trit ends, the value of the signal COMP 2 is evaluated and the output Qn is locked to the value of the inverted signal COMP 2. The voltage Va has not yet exceeded the value Vrif2 and the signal COMP 2 is 0, since the rising front of the transient 2 is slow by assumption. The output signal INT-AP switches from 0 to 1.

When the voltage Va exceeds Vrif2, the signal COMP 2 switches from 0 to 1. The signal Qn remains at the value 1, because the latch circuit 60 is locked and the signal INT-AP remains at the value 1.

When the voltage Va returns below Vrif1, the signal COMP 1 switches from 1 to 0, RIT switches from 1 to 0 and the signal INT-AP switches from 1 to 0.

During the transient, the switch 10 of Figures 8 and 9 opens, the transient suppression intervention voltage is raised to the value Vm2 > Vsm2 and the low-voltage, high-energy transient is not suppressed.

In practice, it has been observed that the circuit according to the invention fully achieves the intended aim, since it allows to suppress high-voltage transients on the power supply line without having to add large and expensive power components.

It has been shown that the above circuit is adapted both for bridge circuits and for half-bridge circuits.

The circuit thus conceived is susceptible of numerous modifications and variations, which may be made to the disclosed solution without departing from the scope of the present invention as defined in the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. An electronic circuit with suppression of high-voltage transients on the power supply line, comprising at least one pair of power transistors (T1, T2) which are series-connected between a power source and the ground, each power transistor being provided with a respective driving circuit (1, 2), **characterized in that** it comprises, for each one of the transistors (T1, T2) of said pair, a diode (D1, D2) and a Zener diode (Z1, Z2), the diode (D1) related to the transistor connected to the supply voltage being connected, by means of its cathode terminal, to the base terminal of said transistor and, by means of its anode terminal, to the anode terminal of the Zener diode (Z1), the cathode terminal whereof is connected to the power source, the cathode terminal of the Zener diode (Z2) of the transistor (T2) that is connected to the ground being connected to the anode terminal of the Zener diode (Z1) related to the transistor (T1) that is connected to the power supply.

2. The circuit according to claim 1, **characterized in that** it comprises a second pair of power transistors (T3, T4) with associated driving circuits (3, 4), and respective diodes (D3, D4) connected, by means of their cathode terminals, to the base terminals of the transistors (T3, T4) of said second pair and, by means of their anode terminals, to the anode terminals of said diode (D1, D2) and of said Zener diode (Z1, Z2) associated with each power transistor (T1, T2) of said at least one pair of power transistors.

3. The circuit according to any of the preceding claims, **characterized in that** the power transistors (T1, T2) of said at least one pair of power transistors connected to the power supply line are transistors of the DMOS P-channel or N-channel type.

4. The circuit according to any of the preceding claims, **characterized in that** it comprises at least one additional pair of diodes (D5, D6) respectively connected, by means of their anode terminal, to the source terminal of the power transistor (T1) of said first pair of transistors that is connected to the power supply line and to the source terminal of the power transistor (T3) of said second pair of transistors (T3, T4) that is connected to the power supply line, the cathode terminals of said additional pair of diodes (D5, D6) being connected to the cathode terminal of the Zener diode (Z2) associated with the second power transistor (T2) of said first pair of power transistors (T1, T2).

5. The circuit according to claim 4, **characterized in that** it comprises an additional diode (D7) which is connected, by means of its cathode terminal, to the common point of the cathode terminals of said additional pair of diodes (D5, D6) and, by means of its anode terminal, to a common point of the anode terminal of the diode (D1) related to the transistor (T1) of the first pair of transistors that is connected to the power supply line and of the anode terminal of the Zener diode (Z1) related to the transistor (T1) of the first pair of transistors.

6. The circuit according to any of the preceding claims, **characterized in that** it comprises an additional Zener diode (Z3) connected between the Zener diode (Z2) that is associated with the ground-connected transistor (T2) of the transistors (T1, T2) of the first pair of power transistors and the diode (D2) that is associated with said transistor (T2) and is connected to its base terminal, switching means (10) being parallel-connected to said additional Zener diode (Z3) and being driven by a control signal (INT-AP).

7. The circuit according to claim 6, **characterized in that** said signal (INT-AP) for the control of said switching means (10) is generated by comparison means (20), which receive in input the supply voltage (Va) and a reference voltage (Vrif), a comparison signal (COMP) in output from said comparison means (20) being sent to delay means (21) for generating said control signal (INT-AP).

8. The circuit according to claim 6, **characterized in that** said control signal (INT-AP) is generated by first and second comparison means (30, 40) which receive in input a supply voltage (Va), a first reference voltage ($V_{rif1}$) and a second reference voltage ($V_{rif2}$), delay means (50) being cascade-connected to said first comparison means (30) and latch means (60) receiving in input the outputs of said delay means (50) and of said second comparison means (40), logic means being cascade-connected to said latch means and receiving in input the output from said latch means and the output from said delay means, in order to generate said control signal.

**Patentansprüche**

1. Elektrische Schaltung mit Unterdrückung von Hochspannungsspitzen auf der Versorgungsleitung, die aufweist:

wenigstens ein Paar von Leistungstransistoren (T1, T2), welche zwischen einer Energiequelle und Masse in Reihe geschaltet sind, wobei jeder Leistungstransistor mit einem jeweiligen Treiberschaltkreis (1, 2) versehen ist, **dadurch gekennzeichnet, dass** sie aufweist: für jeden der Transistoren (T1, T2) dieses Paares eine Diode (D1, D2) und eine Zener-Diode (Z1, Z2), wobei die Diode (D1), welche dem Transistor zugeordnet ist, der mit der Versorgungsspannung verbunden ist, mittels Ihres Kathodenanschlusses mit dem Basisanschluss dieses Transistors verbunden ist und mittels ihres Anodenanschlusses mit dem Anodenanschluss der Zener-Diode (Z1) verbunden ist, wobei der Kathodenanschluss derselben mit der Energiequelle verbunden ist, wobei der Kathodenanschluss der Zener-Diode (Z2) des Transistors (T2), der mit Masse verbunden ist, mit dem Anodenanschluss der Zener-Diode (Z1) verbunden ist, die dem Transistor (T1) zugeordnet ist, der mit der Energieversorgung verbunden ist.

2. Schaltung nach Anspruch 1, **dadurch gekennzeichnet, dass** sie aufweist: ein zweites Paar von Leistungstransistoren (T3, T4) mit zugeordneten Treiberschaltkreisen (3, 4) und jeweiligen Dioden (D3, D4), welche mittels ihrer Kathodenanschlüsse mit den Basisanschlüssen der Transistoren (T3, T4) dieses zweiten Paares und mittels ihrer Anodenanschlüsse mit den Anodenanschlüssen der Diode (D1, D2) und der Zener-Diode (Z1, Z2) verbunden sind, welche mit jedem Leistungstransistor (T1, T2) von dem wenigstens einen Paar von Leistungstransistoren zugeordnet sind.

3. Schaltung nach einem der vorhergehenden Ansprüche, **dadurch gekennzeichnet, dass** die Leistungstransistoren (T1, T2) von dem wenigstens einen Paar von Leistungstransistoren, die mit der Versorgungsleitung verbunden sind, Transistoren vom DMOS P-Kanal oder N-Kanal-Typ sind.

4. Schaltung nach einem der vorhergehenden Ansprüche, **dadurch gekennzeichnet, dass** sie aufweist: wenigstens ein zusätzliches Paar von Dioden (D5, D6), die jeweils mittels ihres Anodenanschlusses mit dem Source-Anschluss des Leistungstransistors (T1) des ersten Paars von Transistoren, der mit der Versorgungsleitung verbunden ist, und mit dem Source-Anschluss des Leistungstransistors (T3) des zweiten Paars von Transistoren (T3, T4) verbunden ist, der mit der Versorgungsleitung verbunden ist, wobei die Kathodenanschlüsse des zusätzlichen Paars von Dioden (D5, D6) mit dem Kathodenanschluss der Zener-Diode (Z2) verbunden sind, die mit dem zweiten Leistungstransistor (T2) des ersten Paars von Leistungstransistoren (T1, T2) in Verbindung stehen.

5. Schaltung nach Anspruch 4, **dadurch gekennzeichnet, dass** sie eine zusätzliche Diode (D7) aufweist, welche mittels ihres Kathodenanschlusses an einen gemeinsamen Punkt des Kathodenanschlusses des zusätzlichen Paars von Dioden (D5, D6) und mittels ihres Anodenanschlusses mit einem gemeinsamen Punkt des Anodenanschlusses der Diode (D1) verbunden ist, die dem Transistor (T1) des ersten Paars von Transistoren zugeordnet ist, der mit der Versorgungsleitung verbunden ist, und des Anodenanschlusses der Zener-Diode (Z1), die dem Transistor (T1) des ersten Paars von Transistoren zugeordnet ist.

6. Schaltung nach einem der vorhergehenden Ansprüche, **dadurch gekennzeichnet, dass** sie aufweist: eine zusätzliche Zener-Diode (Z3), die zwischen die Zener-Diode (Z2), die dem mit Masse verbundenen Transistor (T2) der Transistoren (T1, T2) des ersten Paares von Leistungstransistoren zugeordnet ist, und die Diode (D2) geschaltet ist, die diesem Transistor (T2) zugeordnet und mit dessen Basis-Anschluss verbunden ist, und Schaltmittel (10), welche parallel zu dieser zusätzlichen Zener-Diode (Z3) geschaltet und von einem Steuersignal (INT-AP) gesteuert werden.

7. Schaltung nach Anspruch 6, **dadurch gekennzeichnet, dass** das Signal (INT-AP) für die Steuerung der Schaltmittel (10) von Vergleichsmitteln (20) erzeugt wird, welche am Eingang die Versorgungsspannung (Va) und eine Referenzspannung (Vrif) erhalten, wobei ein Vergleichssignal (COMP) am Eingang der Vergleichsmittel (20) an die Verzögerungsmittel (21) gesendet wird zum Erzeugen des Steuersignals (INT-AP).

8. Schaltung nach Anspruch 6, **dadurch gekennzeichnet, dass** das Steuersignal (INT-AP) erzeugt durch erste und zweite Vergleichsmittel (30, 40) wird, welche am Eingang eine Versorgungsspannung (Va), eine erste Referenzspannung ($V_{rif1}$) und eine zweite Referenzspannung ($V_{rif2}$) erhalten, Verzögerungsmittel (50), welche kaskadenförmig mit den ersten Vergleichsmitteln (30) verbunden sind, und Sperrmittel (60), welche am Eingang die Ausgänge der Verzögerungsmittel (50) und des zweiten Vergleichsmittels (40) erhalten, Logikmittel, welche kaskadenförmig mit den Sperrmitteln- verbunden sind und am Eingang den Ausgang von den Sperrmitteln und den Ausgang der Verzögerungsmittel erhalten, um das Steuersignal zu erzeugen.

**EP 0 949 736 B1**

**Revendications**

1.  Circuit électronique à suppression de transitoires haute tension sur la ligne d'alimentation, comprenant au moins une paire de transistors de puissance (T1, T2) connectés en série entre une source d'alimentation et la masse, chaque transistor de puissance étant muni d'un circuit de pilotage respectif (1, 2), **caractérisé en ce qu'**il comprend, pour chacun des transistors (T1, T2) de ladite paire, une diode (D1, D2) et une diode Zener (Z1, Z2), la diode (D1) associée au transistor connecté à la tension d'alimentation étant connectée, par sa borne de cathode, à la borne de base du transistor et, par sa borne d'anode, à la borne d'anode de diode Zener (Z1), dont la borne de cathode est connectée à la source d'alimentation, la borne de cathode de la diode Zener (Z2) du transistor (T2) qui est connectée à la masse étant connectée à la borne d'anode de la diode Zener (Z1) associée au transistor (T1) qui est connecté à l'alimentation.

2.  Circuit selon la revendication 1, **caractérisé en ce qu'**il comprend une seconde paire de transistors de puissance (T3, T4) et des circuits de pilotage associés (3, 4) et des diodes respectives (D3, D4) connectées, par leurs bornes de cathode, aux bornes de base des transistors (T3, T4) de la seconde paire et, par leurs bornes d'anode, aux bornes d'anode de la diode (D1, D2) et de la diode Zener (Z1, Z2) associée à chaque transistor de puissance (T1, T2) de ladite au moins une paire de transistors de puissance.

3.  Circuit selon l'une quelconque des revendications précédentes, **caractérisé en ce que** les transistors de puissance (T1, T2) de ladite au moins une paire de transistors de puissance connectés à la ligne d'alimentation sont des transistors de type DMOS à canal P ou à canal N.

4.  Circuit selon l'une quelconque des revendications précédentes, **caractérisé en ce qu'**il comprend au moins une paire supplémentaire de diodes (D5, D6) respectivement connectées, par leurs bornes d'anode, à la borne de source du transistor de puissance (T1) de la première paire de transistors qui est connectée à la ligne d'alimentation et à la borne de source du transistor de puissance (T3) de la seconde paire de transistors (T3, T4) qui est connectée à la ligne d'alimentation, les bornes de cathode de la paire supplémentaire de diodes (D5, D6) étant connectées à la borne de cathode de la diode Zener (Z2) associée au second transistor de puissance (T2) de la première paire de transistors de puissance (T1, T2).

5.  Circuit selon la revendication 4, **caractérisé en ce qu'**il comprend une diode supplémentaire (D7) qui est connectée par sa borne de cathode au point commun des bornes de cathode de la paire supplémentaire de diodes (D5, D6) et par sa borne d'anode à un point commun de la borne d'anode de la diode (D1) associée au transistor (T1) de la première paire de transistors qui est connectée à la ligne d'alimentation et de la borne d'anode de la diode Zener (Z1) associée au transistor (T1) de la première paire de transistors.

6.  Circuit selon l'une quelconque des revendications précédentes, **caractérisé en ce qu'**il comprend une diode Zener supplémentaire (Z3) connectée entre la diode Zener (Z2) qui est associée au transistor connecté à la masse (T2) des transistors (T1, T2) de la première paire de transistors de puissance et la diode (D2) qui est associée au transistor (T2) et est connectée à sa borne de base, un moyen de commutation (10) étant connecté en parallèle sur la diode Zener supplémentaire (Z3) et étant piloté par un signal de commande (INT-AP).

7.  Circuit selon la revendication 6, **caractérisé en ce que** ledit signal (INT-AP) de commande du moyen de commutation (10) est produit par un moyen de comparaison (20) qui reçoit la tension d'alimentation (Va) et une tension de référence (Vrif), un signal de comparaison (COMP) en sortie du moyen de comparaison (20) étant envoyé à un moyen de retard (21) pour produire le signal de commande (INT-AP).

8.  Circuit selon la revendication 6, **caractérisé en ce que** le signal de commande (INT-AP) est produit par des premier et second moyens de comparaison (30, 40) qui reçoivent une tension d'alimentation (Va), une première tension de référence ($V_{rif1}$) et une seconde tension de référence ($V_{rif2}$), un moyen de retard (50) étant connecté en cascade avec le premier moyen de comparaison (30) et un moyen de bascule (60) recevant les sorties du moyen de retard (50) et du second moyen de comparaison (40), un moyen logique étant connecté en cascade au moyen de bascule et recevant la sortie du moyen de bascule et la sortie du moyen de retard, pour produire le signal de commande.

*Fig.1*

*Fig.2*

*Fig.3*

Fig. 4

Fig. 5

Fig.6

FIG.7

FIG.8

Fig. 9

Fig. 10

Fig. 11

Fig. 12

Fig. 13

Fig. 14

Fig. 15

Fig. 16